Europäisches Patentamt

European Patent Office

Office européen des brevets

(19)

(11) Veröffentlichungsnummer: **0 339 398**
**A1**

## (12) EUROPÄISCHE PATENTANMELDUNG

(21) Anmeldenummer: **89106705.0**

(51) Int. Cl.4: **G06F 15/336**

(22) Anmeldetag: **14.04.89**

(30) Priorität: **23.04.88 DE 3813857**

(43) Veröffentlichungstag der Anmeldung:
**02.11.89 Patentblatt 89/44**

(84) Benannte Vertragsstaaten:
**CH DE ES FR GB LI**

(71) Anmelder: **Licentia Patent-Verwaltungs-GmbH**
**Theodor-Stern-Kai 1**
**D-6000 Frankfurt/Main 70(DE)**

(72) Erfinder: **Engel, Harald, Dipl.-Ing.**
**Fünf-Bäume-Weg 184**
**D-7900 Ulm(DE)**

(74) Vertreter: **Schulze, Harald Rudolf, Dipl.-Ing. et al**
**Licentia Patent-Verwaltungs-GmbH**
**Theodor-Stern-Kai 1**
**D-6000 Frankfurt/Main 70(DE)**

(54) Verfahren zur Verringerung des Störanteils eines periodischen Signals und Vorrichtung zum Durchführen des Verfahrens.

(57) Verfahren zum Erzeugen von einen geringen Störanteil enthaltenden Abtastwerten zweiter Art eines periodischen Signals aus einer größeren Zahl von Abtastwerten erster Art des periodischen Signals, die einen größeren Störanteil enthalten, mittels eines Autokorrelators mit einer ersten [21-26] und einer zweiten Speicherplatzreihe [31-36] zur Speicherung der Abtastwerte erster Art und Multiplikatoren [41-46], in denen je zwei sich entsprechende Werte der beiden Speicherplatzreihen multipliziert werden. Die Ergebnisse jedes Multiplikators werden für sich über eine bestimmte Meßzeit aufsummiert, so daß jede Summe einen Abtastwert zweiter Art darstellt.

FIG. 4

## Verfahren zur Verringerung des Störanteils eines periodischen Signals und Vorrichtung zum Durchführen des Verfahrens.

Die Erfindung bezieht sich auf ein Verfahren zum Erzeugen von Abtastwerten zweiter Art eines periodischen Signals, die einen geringen Störanteil enthalten, aus einer größeren Zahl von zeitlich aufeinanderfolgenden Abtastwerten erster Art des periodischen Signals, die einen größeren Störanteil enthalten, gemäß Oberbegriff des Patentanspruchs 1 sowie auf eine Vorrichtung zum Durchführen des Verfahrens. Ein solches Verfahren ist beispielsweise aus der EP- 0 010 922 A1 bekannt. Verfahren bzw. Vorrichtungen dieser Art werden beispielsweise zur Tonauswertung in Funkgeräten bzw. Funknetzen oder in Fernsprechanlagen zur Entstörung von verrausch ten Signalen eingesetzt.

Zum Durchführen des bekannten Verfahrens ist in der EP-0 010 922 A1 eine Vorrichtung angegeben, die im .wesentlichen aus zwei Speicherplatzreihen (Schieberegistern) mit jeweils n Speicherplätzen besteht. Die beiden Schieberegister sind über einen zusätzlichen Speicherplatz in Reihe geschaltet, wobei dieser zusätzliche Speicherplatz die Registermitte definiert. Der letzte Speicherplatz am Ausgang des ersten Registers und der erste Speicherplatz am Eingang des zweiten Registers sind zusätzlich mit den Eingängen eines als Multiplikator dienenden Exclusiv-Oder-Gliedes verbunden, das ausgangsseitig an eine Summationseinrichtung angeschlossen ist.

Bei dem bekannten Verfahren werden in einem ersten Schritt $2n + 1$ Abtastwerte erster Art des zu untersuchenden periodischen Signals in den beiden Schieberegistern und in dem zusätzlichen Speicherplatz eingespeichert. Im nächsten Schritt werden die in den Schieberegistern gespeicherten Werte zyklisch durch das jeweilige Register geschoben, und zwar mit gegenläufigen Schieberichtungen in den beiden Registern. Das Exclusiv-Oder-Glied multipliziert dabei jedesmal den jeweiligen Abtastwert in dem ersten Speicherplatz am Eingang des zweiten Registers mit dem jeweiligen Abtastwert in dem letzten Speicherplatz am Ausgang des ersten Schieberegisters. Die Multiplikationsergebnisse werden in dem nachgeschalteten Summationglied zu einem Wert aufsummiert.

Anschließend werden alle in dem Register und in dem zusätzlichen Speicherplatz gespeicherten Abtastwerte erster Art simultan um einen Speicherplatz weitergeschoben und dabei in den ersten Speicherplatz des ersten Registers ein neuer Abtastwert erster Art eingespeichert und in den letzten Speicherplatz des zweiten Registers der alte Abtastwert von dem neuen Abtastwert überschrieben. Danach werden die gespeicherten Abtastwerte, wie bereits weiter oben geschildert, durch die Register geschoben und miteinander multipliziert sowie die Multiplikationsergebnisse zu einem Wert aufsummiert.

Dieser Wert ist (im ungestörten Fall) proportional dem Quadrat desjenigen Abtastwertes erster Art, der gerade in dem zusätzlichen Speicherplatz in der Registermitte eingespeichert ist. Die Differenz zwischen Minimum und Maximum der einzelnen Summenwerte ist daher von der Länge der beiden Register abhängig und beträgt bei Vorzeichenoperationen maximal $2n$.

Die Summation der n Multiplikationsergebnisse pro Zyklus zu einem Summenwert liefert bei x Abtastwerten x bzw. 2x Summationswerte, deren Entstörung unabhängig von der Meßdauer ist. Daher muß in vielen Fällen mit den so gewonnenen Summenwerten in einer nachgeschalteten gleichartigen Vorrichtung mit dem gleichen Verfahren eine zweite Korrelation der Werte durchgeführt werden. Unter Umständen sind sogar weitere Korrelationen dieser Art erforderlich, für die wiederum weitere Vorrichtungen dieser Art benötigt werden.

Die Aufgabe der Erfindung besteht darin, ein Verfahren der eingangs genannten Art zu schaffen, mit dem eine möglichst hohe Entstörung des periodischen Signals bei gleichzeitig möglichst geringem Vorrichtungsaufwand zum Durchführen des Verfahrens erreicht wird.

Die erfindungsgemäße Lösung der Aufgabe ist im Patentanspruch 1 beschrieben. Die übrigen Ansprüche enthalten vorteilhafte Aus- und Weiterbildungen des erfindungsgemäßen Verfahrens (Ansprüche 2 und 3) sowie vorteilhafte Ausführungsformen einer Vorrichtung zum Durchführen des erfindungsgemäßen Verfahrens (Ansprüche 4 bis 12).

Im folgenden wird die Erfindung anhand der Figuren näher erläutert, die verschiedene vorteilhafte Ausführungsformen der erfindungsgemäßen Vorrichtung zur Durchführung des erfindungsgemäßen Verfahrens zeigen.

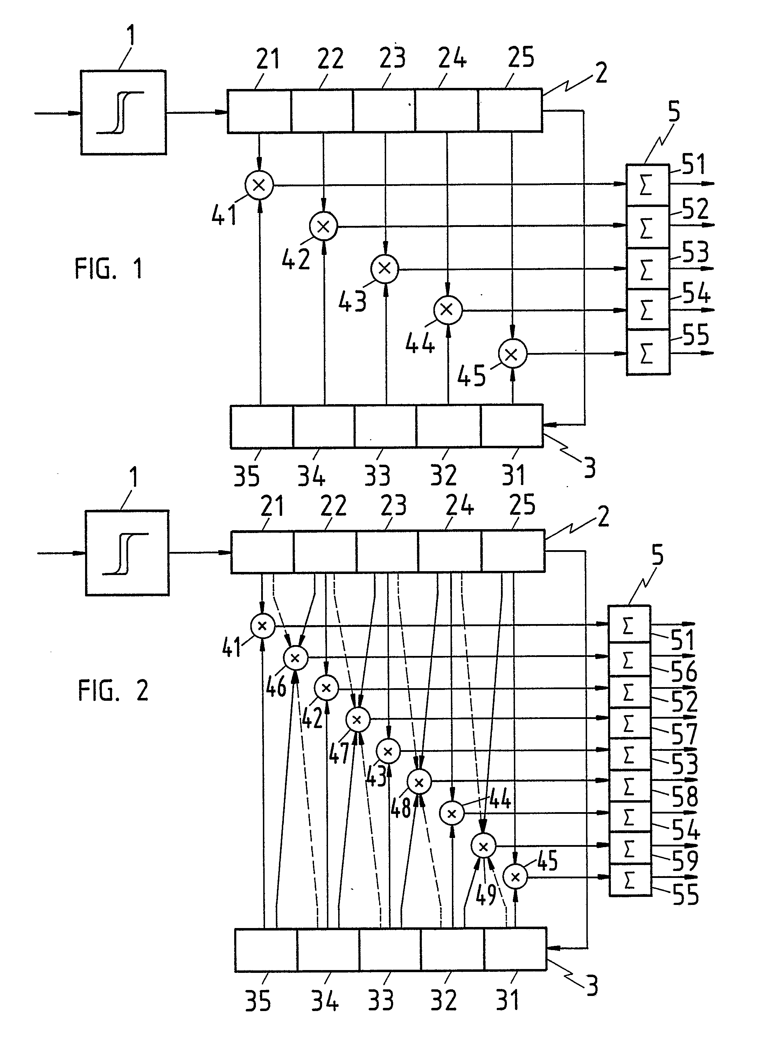

Die erfindungsgemäße Vorrichtung in FIG. 1 enthält zwei in Reihe geschaltete Schieberegister 2 und 3, die beispielhaft jeweils aus fünf Speicherplätzen 21-25 bzw. 31-35 bestehen. Jeder Speicherplatz 21-25 des ersten Schieberegisters 2 ist (in aufsteigender Reihenfolge) jeweils an einen Multiplikator 41-45 angeschlossen. Ebenso die Speicherplätze 35-31 des zweiten Schieberegisters 3 (allerdings in umgekehrter Reihenfolge) . Die Speicherplätze, die an denselben Multiplikator angeschlossen sind, bilden dabei jeweils ein Speicherplatzpaar, 21, 35 bzw. 22, 34 bzw. 23, 33 bzw. 24, 32 bzw. 25, 31. Jeder Multiplikator 41-45 ist seinerseits ausgansseitig an ein Summationsglied 51-55 einer Summationseinrichtung 5 angeschlossen. Dem Eingang des ersten Schieberegisters 2 ist ein Begrenzerverstärker 1 vorgeschaltet.

Der Einfachheit halber sei im folgenden angenommen, daß der Begrenzerverstärker eine zeitliche Folge von logischen Signalen 0 oder 1 liefere, die die Abtastwerte erster Art des zu untersuchenden periodischen Signals darstellen. Die Werte werden in die beiden Schieberegister 2 und 3 eingespeichert und mit jedem Takt um einen Speicherplatz weitergeschoben. Zwischen zwei Takten werden die Inhalte der Speicherplatzpaare 21, 35; 22, 34; 23, 33; 24, 32; 25, 31 in dem zugehörigen Multiplikator 41; 42; 43; 44; 45 multipliziert und das jeweilige Ergebnis (0 oder 1) in dem zughörigen Summationsglied 51; 52; 53; 54; 55 der Summationseinrichtung 5 den dort bereits gespeicherten Ergebnissen hinzugefügt. Die so erhaltenen Summenwerte in den Summationsgliedern entsprechen dabei gemäß der weiter unten diskutierten allgemeinen mathematischen Abhandlung des erfindungsgemäßen Verfahrens dem Abtastwert zweiter Art des zu untersuchenden periodischen Signals. Der Grad der Entstörung ist bei diesem Verfahren abhängig von der Meßzeit, d.h. von der Zahl der akumulierten Multiplikationsergebnisse.

Die erfindungsgemäße Vorrichtung in FIG. 2 unterscheidet sich von der Vorrichtung der FIG. 1 dadurch, daß zusätzliche Multiplikatoren 46-49 mit nachgeschalteten zusätzlichen Summationsgliedern 56-59 vorsehen sind. Diese zusätzlichen Multiplikatoren 46-49 sind jeweils mit einem Speicherplatz benachbarter "regulärer" Speicherplatzpaare überkreuz zu jeweils einem weiteren Speicherplatzpaar verbunden, und zwar die weiteren Speicherplatzpaare 21, 34 bzw. 22, 33 bzw. 23, 32 bzw. 24, 31 (gestrichelte Linien) oder alternativ hierzu die Speicherplatzpaare 22, 35 bzw. 23, 34 bzw. 24, 33 bzw. 25, 32 (durchgezogene Linien). Die in den zusätzlichen Summationsgliedern 56-59 gebildeten Summenwerten der Multiplikationsergebnisse dieser zusätzlichen Multiplikatoren 46-49 stellen zusätzliche Abtastwerte zweiter Art dar, die phasenmäßig jeweils zwischen den Abtastwerten zweiter Art liegen, die aus den Inhalten der jeweils unmittelbar benachbarten "regulären" Speicherplatzpaare gebildet werden.

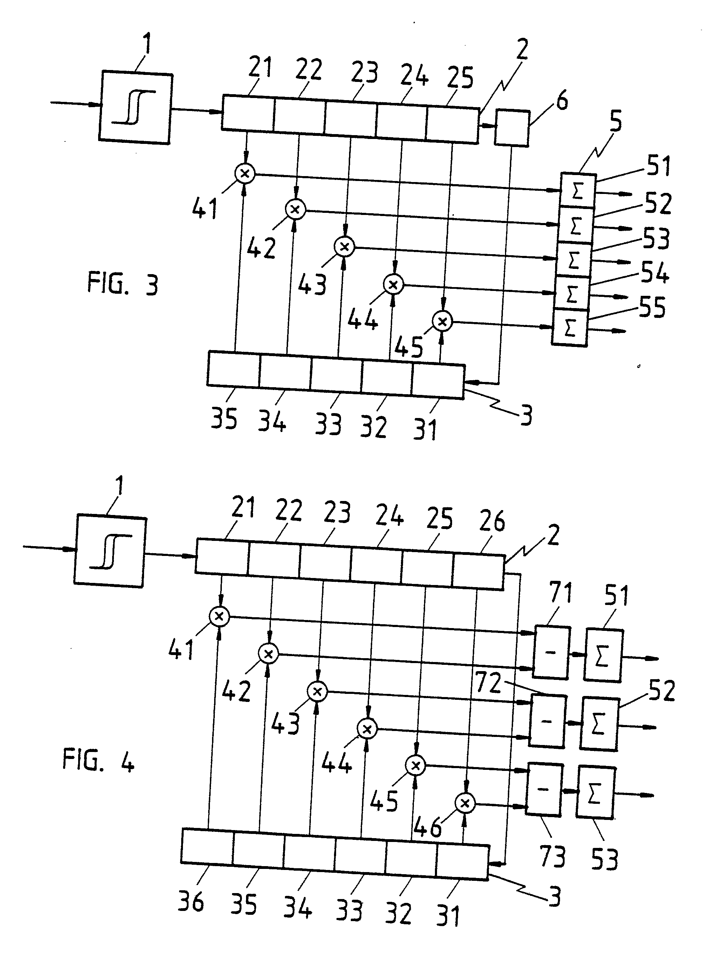

Die erfindungsgemäße Vorrichtung in FIG. 3 unterscheidet sich von der Vorrichtung in FIG. 1 nur dadurch, daß zwischen Ausgang des ersten Schieberegisters 2 und dem Eingang des zweiten Schieberegisters 3 ein zusätzlicher Speicherplatz 6 vorgesehen ist, der als Zwischenspeicher dient.

Die erfindungsgmäße Vorrichtung in FIG. 4 unterscheidet sich von der Vorrichtung in FIG. 1 dadurch, daß am Beispiel von Schieberegistern 2 und 3 mit jeweils sechs Speicherplätzen 21-26 und 31-36 die Multiplikatoren 41, 42 bzw. 43, 44 bzw. 45, 46 jeweils benachbarter Speicherplatzpaare 21, 36; 22, 35 bzw. 23, 34, 24, 33 bzw. 25, 32; 26, 31 jeweils an ein Subtraktionsglied 71 bzw. 72 bzw. 73 angeschlossen sind, das ausgangsseitig jeweils an ein zugehöriges Summationsglied 51 bzw. 52 bzw. 53 angeschlossen ist.

Mit dieser Vorrichtung gelingt es, wie aus der weiter unten diskutierten mathematischen Abhandlung des erfindungsgemäßen Verfahrens hervorgeht, den bei dem erfindungsgmäßen Verfahren nicht interessierenden Term in jeden der Multiplikationsergebnisse, der die Momentanphase enthält, zu eliminieren, zumindest aber zu verringern.

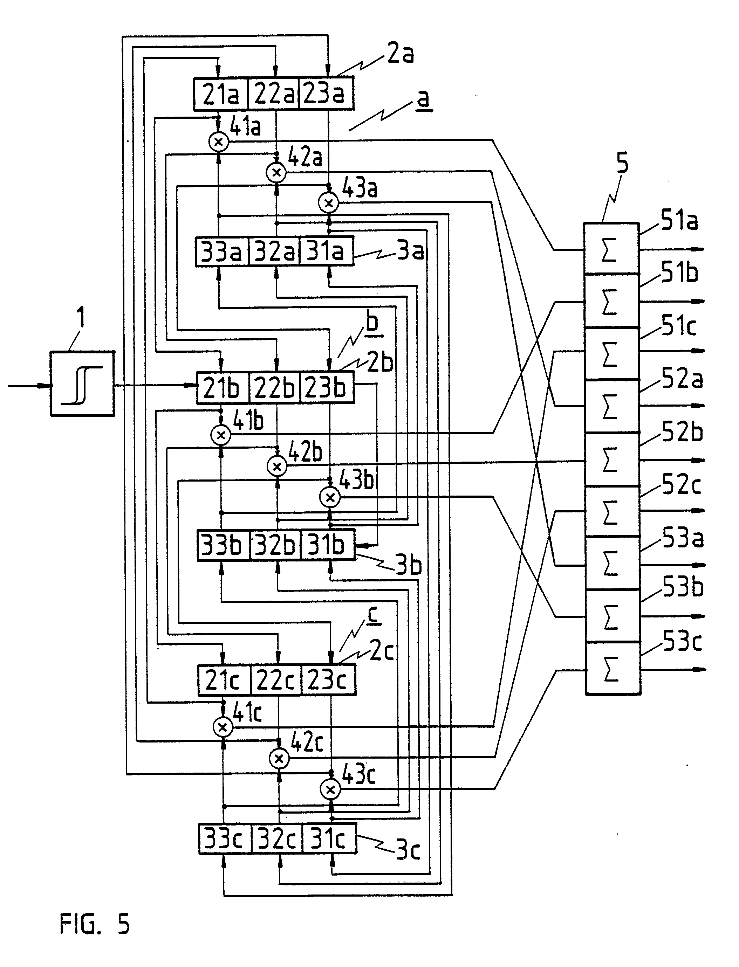

Die erfindungsgemäße Vorrichtung in FIG. 5 schließlich besteht aus mehreren (hier beispielhaft aus drei) gleichartigen Teilvorrichtungen a, b und c, die vom prinzipiellen Aufbau her identisch sind mit der Vorrichtung in FIG. 1 mit jeweils eigenem ersten und zweiten Schieberegister (beispielhaft jeweils aus drei Speicherplätzen bestehend) 21a-23a, 31a-33a bzw. 21b-23b; 31b-33b bzw. 21c-23c ; 31c-33c, eigenen Multiplikatoren 41a-43a bzw. 41b-43b bzw. 41c-43c und eigenen Summationsgliedern 51a-53a bzw. 51b-53b bzw. 51c-53c.

Dem Eingang der einen Teilvorrichtung b ist ein Begrenzerverstärker 1 vorgeschaltet. Dieser Teilvorrichtung b werden die Abtastwerte des Eingangssignals zugeführt. Durch die zyklische Vertauschung der Inhalte der einzelnen Speicherplatzreihen 2a, 2b, 2c bzw. 3a, 3b, 3c, werden die einzuspeichernden Abtastwerte erster Art zyklisch auf die drei Teilvorrichtungen a, b und c verteilt. Beispielsweise wird eine Folge von neun Abtastwerten so verteilt, daß der erste, vierte und siebte Wert in dem ersten Schiebe- register 2a der ersten Teilvorrichtung, der zweite, fünfte und achte Wert in dem ersten Schieberegister 2b der zweiten Teilvorrichtung und der dritte, sechste und neunte Wert in dem ersten Schieberegister 2c der dritten Teilvorrichtung eingespeist werden. Die erfindungsgemäße Signalverarbeitung (Korrelation) in den einzelnen Teilvorrichtungen erfolgt in der gleichen Weise wie in der Vorrichtung in FIG. 1.

Der wesentliche Unterschied des erfindungsgemäßen Verfahrens von dem aus der EP- 0 010 922 11 bekannten Verfahren besteht darin, daß bei dem erfindungsgemäßen Verfahren die Multiplikationsergebnisse jeder Verknüpfung (d.h. jedes über einen Multiplikator verknüpften Speicherplatzpaares der beiden Schieberegister in den erfindungsgemäßen Vorrichtungen der FIG. 1-5 zum Durchführen des Verfahrens) getrennt über eine bestimmte Meßzeit (d.h. beispielsweise über mehrere Schiebetakte hinweg) aufsummiert werden. Dabei verschwinden die Terme, die einen Bezug zur Amplitude eines Abtastwertes (erster Art) haben.

Die Differenz zwischen Maximum und Minimum, die am Ende der Meßzeit in mindestens je einem der mindestens n Zähler enthalten ist, ist vom Störabstand und von der Zahl m der Abtastwerte erster Art während der Meßzeit abhängig und beträgt maximal 2 m. Ist m > n läßt sich beim erfindungsgemäßen Verfahren bei gleicher Meßzeit eine bessere Störbefreiung erreichen als bei dem bekannten Verfahren.

Bei dem erfindungsgemäßen Verfahren werden Abtastwerte (erster Art) in zwei hintereinandergeschalteten Schieberegistern gespeichert, deren Inhalt (also die gespeicherten Abtastwerte erster Art) mit jedem Schiebetaktimpuls gegeneinander verschoben werden. Zusammengehörige Inhalte werden (über die Multiplikatoren) derart verknüpft, daß an den Ausgängen der Multiplikatoren je nach Verknüpfung die Amplitudenwerte:

$$A_n = \tfrac{1}{2} A^2 (\cos (2n-1) \delta - \cos 2\omega t)$$
$$\text{bzw.} \quad \tfrac{1}{2} A^2 (\cos (2n-1) \delta + \cos 2\omega t) \qquad (1)$$
oder
$$A_n = \tfrac{1}{2} A^2 (\cos (2n-2) \delta - \cos 2\omega t)$$
$$\text{bzw.} \quad \tfrac{1}{2} A^2 (\cos (2n-2) \delta + \cos 2\omega t) \qquad (2)$$

anstehen, wobei gilt:

A: Amplitude des auszuwertenden periodischen Signals (beispielsweise eines Tones)

$\delta$: Winkeldifferenz zwischen zwei nebeneinanderliegenden Abtastwerten erster Art, d.h. $\delta = \omega t$ mit $\omega t$ als Abstand zweier Abtastwerte erster Art.

$\omega$: $\omega = 2 \pi f$; $f$ = Frequenz des auszuwertenden periodischen Signals.

n: Abstand von der Registermitte in Zahl der Speicherplätze (Flip-Flops)

Die an den Ausgängen der Multiplikatoren anstehenden Werte werden getrennt über die Meßzeit aufsummiert. An den Ausgängen der Summationsglieder stehen Abtastwerte zweiter Art des auszuwertenden periodischen Signals an, die einen geringeren Störanteil aufweisen als die eingespeicherten Abtastwerte erster Art.

Aus diesen läßt sich auf an sich bekannte Weise die Frequenz oder Periodendauer des auszuwertenden Signals ermitteln, wie z.B. durch Ausmessen der Abstände von Maxima und/oder von Nulldurchgängen.

Die Gleichung (1) gilt dabei für Verknüpfung, wie sie beispielsweise durch die Multiplikatoren 41-45 in der Vorrichtung der FIG. 1 realisiert sind, während die Gleichung (2) für Verknüpfungen steht, wie sie beispielsweise durch die zusätzliche Multiplikatoren 46-49 in der Vorrichtung der FIG. 2 realisiert sind.

Die hier angewandte Multiplikation zweier sich entsprechender Abtastwerte (erster Art) läßt sich mathematisch wie folgt darstellen:

$$A \cdot \cos (\omega t-\beta_1) \cdot A \cdot \cos (\omega t + \beta_1) \qquad (3)$$
$$= A^2 \cdot (\cos\omega t \cos\beta_1 + \sin\omega t \sin\beta_1)(\cos\omega t \cos\beta_1 - \sin\omega t \sin\beta_1) \qquad (4)$$
$$= A^2 \cdot (\cos^2\omega t \cdot \cos^2\beta_1 - \sin^2\omega t \cdot \sin^2\beta_1) \qquad (5a)$$

$$= A^2 (\cos^2\beta_1 - \sin^2\omega t) \qquad (6a)$$
$$= \tfrac{1}{2} A^2 (\cos 2\beta_1 + \cos 2\omega t) \qquad (7a)$$
oder
$$A \cdot \sin (\omega t-\beta_1) \cdot A \sin (\omega t + \beta_1) \qquad (3b)$$
$$= A^2 \cdot (\sin^2\omega t \cos^2\beta_1 - \cos^2\omega t \sin^2\beta_1) \qquad (5b)$$
$$A^2 (\cos^2\beta_1 - \cos^2\omega t) \qquad (6b)$$
$$= \tfrac{1}{2} A^2 (\cos 2\beta_1 - \cos 2\omega t) \qquad (7b)$$

wobei der zweite Term in den Gleichungen (7a) und (7b) die Momentanphase enthält und $2\beta_1$ der phasenmäßige Abstand der beiden Abtastwerte erster Art ist, die miteinander multipliziert werden.

Beim bekannten Verfahren wird über n simultan erzeugte Multiplikationen mit $\beta_1$ bis $\beta_n$ summiert. Damit ergibt sich ein Abtastwert zweiter Art im ungestörten Fall zu

$$A_{2xC} = \tfrac{n}{2} A^2 \cdot \cos 2\omega t \qquad (8)$$

Die $\beta$ enthaltenden Terme verschwinden bei der Summierung. Die Abtastwerte zweiter Art entstehen daher beim bekannten Verfahren nacheinander.

Beim erfindungsgemäßen Verfahren wird das Ergebnis jedes Multiplikators über die Meßzeit aufsummiert.

Die Summierung über x Abtastwerte erster Art liefert einen Abtastwert zweiter Art im ungestörten Fall zu:

$$A_{2xA} = \tfrac{x}{2} A^2 \cos 2\beta_n$$

Die $\omega$ enthaltenden Terme verschwinden bei der Summierung. Die Abtastwerte der zweiten Art entstehen daher beim erfindungsgemäßen Verfahren simultan.

Es versteht sich, daß die Erfindung mit fachmännischen Wissen und Können aus- und weitergebildet bzw. an die unterschiedlichen Anwendungen angepaßt werden kann, ohne daß dies hier an dieser Stelle näher erläutert werden müßte.

So ist es z.B. möglich, anstelle eines Begrenzerverstärkers (oder Vorzeichendetektors oder Schwellenwertschalters) einen Analog-Digital-Wandler einzusetzen.

Weiterhin ist es möglich die Multiplikatoren in Form von Exclusiv-Oder-Gliedern zu realisieren.

Schließlich ist möglich, in der Vorrichtung der FIG. 5 anstelle der Teilvorrichtungen gemäß FIG. 1 andere Teilvorrichtungen einzusetzen, beispielsweise Teilvorrichtungen gemäß den Figuren 2 oder 3 oder 4.

Ein wesentlicher Vorteil der Erfindung besteht darin, daß beliebig viele Einzelsignale simultan ausgewertet werden können bis zu Störabständen $\frac{S+N}{N}$ von 3dB, wobei mit S bzw. N die Amplituden des Signals bzw. des Rauschsignals bezeichnet sind.

Ansprüche

1. Verfahren zum Erzeugen von Abtastwerten zweiter Art eines periodischen Signals, die einen geringen Störanteil enthalten, aus einer größeren Zahl von zeitlich aufeinanderfolgenden Abtastwerten erster Art des periodischen Signals, die einen größeren Störanteil enthalten, mittels eines Autokorrelators mit einer ersten und einer zweiten Speicherplatzreihe zur Speicherung der Abtastwerte erster Art und Multiplikatoren, in denen je zwei sich entsprechende Abtastwerte erster Art der beiden Speicherplatzreihen multipliziert werden, dadurch gekennzeichnet, daß die Ergebnisse jedes Multiplikators (41-45) für sich über eine bestimmte Meßzeit aufsummiert werden und jede dieser Summen (Σ) einen Abtastwert zweiter Art darstellt.

2. Verfahren nach Anspruch 1, dadurch gekennzeichnet, daß zur Gewinnung zusätzlicher Abtastwerte zweiter Art, die phasenmäßig zwischen den nach Anspruch 1 erzeugten Abtastwerten zweiter Art liegen, in zusätzlichen Multiplikatoren (46-49) die Abtastwerte erster Art der ersten Speicherplatzreihe (2) mit Abtastwerten erster Art der zweiten Speicherplatzreihe (3) multipliziert werden, die rechts oder links neben den den Abtastwerten erster Art der ersten Speicherplatzreihe (2) entsprechenden Abtastwerten erster Art der zweiten Speicherplatzreihe (3) nach Anspruch 1 liegen, und daß jede dieser Summen (Σ) einen phasenmäßig zwischen zwei nach Anspruch 1 erzeugten Abtastwerten zweiter Art liegenden zusätzlichen Abtastwert zweiter Art darstellt.

3. Verfahren nach Anspruch 1, dadurch gekennzeichnet, daß zur Eliminierung, zumindest jedoch zur Minimierung des die Momentanphase enthaltenden Terms in den Multiplikationsergebnissen jeweils die Differenz der Multiplikationsergebnisse von zwei benachbarten Multiplikatoren (41, 42; 43, 44; 45, 46) gebildet wird, daß diese Differenzen für jedes Multiplikatorpaar (41, 42; 43, 44; 45, 46) getrennt über die Meßzeit aufsummiert werden und daß jede dieser Summen (Σ) einen Abtastwert zweiter Art darstellt.

4. Vorrichtung zum Ausführen des Verfahrens nach Anspruch 1, dadurch gekennzeichnet,
-daß die erste Speicherplatzreihe (2) ausgangsseitig mit dem Eingang der zweiten Speicherplatzreihe (3) verbunden ist;
-daß die beiden Speicherplatzreihen (2, 3) jeweils n Speicherplätze (21-25; 31-35) umfassen;
-daß die Speicherplätze (21-25) der ersten Speicherplatzreihe in aufsteigender Reihenfolge jeweils an einen von n Multiplikatoren (41-45) angeschlossen sind und daß die Speicherplätze (35-31) der zweiten Speicherplatzreihe (3) in umgekehrter Reihenfolge jeweils an denselben Multiplikator angeschlossen sind;

-daß die n Multiplikatoren (41-45) ausgangsseitig jeweils an eines von n Summationsgliedern (51-55) einer Summationseinrichtung (5) angeschlossen sind (FIG. 1).

5. Vorrichtung nach Anspruch 4, dadurch gekennzeichnet, daß die erste Speicherplatzreihe (2) ausgangsseitig über einen zusätzlichen Speicherplatz (6) mit dem Eingang der zweiten Speicherplatzreihe (3) verbunden ist (FIG. 3).

6. Vorrichtung nach Anspruch 4 zum Ausführen des Verfahrens nach Anspruch 2, dadurch gekennzeichnet,
-daß die Speicherplätze (21-24) der ersten Speicherplatzreihe (2) mit Ausnahme des letzten Speicherplatzes (25) am Ausgang der ersten Speicherplatzreihe (2) in aufsteigender Reihenfolge zusätzlich jeweils an einen von n-1 zusätzlichen Multiplikatoren (46-49) angeschlossen sind und daß die Speicherplätze (34-31) der zweiten Speicherplatzreihe (3) mit Ausnahme des letzten Speicherplatzes (35) der zweiten Speicherplatzreihe (3) in umgekehrter Reihenfolge jeweils an denselben zusätzlichen Multiplikator angeschlossen sind;
-daß die zusätzlichen Multiplikatoren (46-49) ausgangsseitig jeweils an eines von n-1 zusätzliche Summationsgliedern (56-59) der Summationseinrichtung (5) angeschlossen sind (FIG. 2).

7. Vorrichtung nach Anpruch 4 zum Ausführen des Verfahrens nach Anspruch 2, dadurch gekennzeichnet,
-daß die Speicherplätze (22-25) der ersten Speicherplatzreihe (2) mit Ausnahme des ersten Speicherplatzes (21) am Eingang der ersten Speicherplatzreihe (2) in aufsteigender Reihenfolge zusätzlich jeweils an einen der n-1 zusätzliche Multiplikatoren (46-49) angeschlossen sind und daß die Speicherplätze (35-32) der zweiten Speicherplatzreihe (3) mit Ausnahme des ersten Speicherplatzes (31) am Eingang der zweiten Speicherplatzreihe (3) in umgekehrter Reihenfolge jeweils an denselben zusätzlichen Multiplikator angeschlossen sind;
-daß die zusätzlichen Multiplikatoren (46-49) ausgangsseitig jeweils an eines der n-1 zusätzlichen Summationseinrichtung (56-59) der Summationseinrichtung (5) angeschlossen sind (FIG. 2)

8. Vorrichtung nach Anpruch 4 zum Ausführen des Verfahrens nach Anspruch 3, dadurch gekennzeichnet,
-daß die Multiplikatoren (41, 42 bzw. 43, 44 bzw. 45, 46) unmittelbar benachbarter Speicherplatzpaare (21, 36; 22, 35 bzw. 23, 34; 24, 33 bzw. 25, 32; 26, 31) jeweils paarweise an ein Subtraktionsglied (71 bzw. 72 bzw 73) angeschlossen sind;
-daß die Subtraktionsglieder (71-73) ausgangsseitig jeweils an ein Summationsglied (51-53) angeschlossen sind (FIG. 4).

5

9. Vorrichtung nach einem der Ansprüche 4 bis 8, dadurch gekennzeichnet,

-daß die Vorrichtung in mehrere gleichartige Teilvorrichtungen (a, b, c) mit jeweils eigener erster und zweiter Speicherplatzreihe (2a; 3a bzw. 2b; 3b bzw. 2c; 3c), eigenen Multiplikatoren (41a-43a bzw. 41b-43b bzw. 41c-43c) und eigenen Summationsgliedern (51a-53a bzw. 51b-53b bzw. 51c-53c) unterteilt ist;

-daß nur eine Teilvorrichtung (b) so ausgebildet ist, daß die Abtastwerte erster Art (horizontal) durch die erste und die zweite Speicherplatzreihe (2b, 3b) geschoben werden;

-daß die ersten Speicherplatzreihen (2a, 2b, 2c) der Teilvorrichtungen (a, b, c) und die zweiten Speicherplatzreihen (3a, 3b, 3c) der Teilvorrichtungen (a, b, c) jeweils so miteinander verbunden sind, daß die ersten Speicherplatzreihen (2a, 2b, 2c) zyklisch ihren Inhalt tauschen und die zweiten Speicherplatzreihen (3a, 3b, 3c) entgegengesetzt zyklisch ihren Inhalt tauschen (FIG. 5).

10. Vorrichtung nach einem der Ansprüche 4 bis 9, dadurch gekennzeichnet, daß der Vorrichtung eingansseitig ein Begrenzerverstärker (1) vorgeschaltet ist.

11. Vorrichtung nach einem der Ansprüche 4 bis 9, dadurch gekennzeichnet, daß der Vorrichtung eingangsseitig ein Analog-Digital-Wandler vorgeschaltet ist.

12. Vorrichtung nach einem der Ansprüche 4 bis 9, dadurch gekennzeichnet, daß die Multiplikatoren (41-45 bzw. 41-49 bzw. 41a-c - 43a-c) mit Exclusiv-Oder-Gliedern realisiert sind.

FIG. 1

FIG. 2

FIG. 3

FIG. 4

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 080 660 (J.N. CONSTANT) * Figur 2; Spalte 13, Zeile 63 - Spalte 15, Zeile 22 * --- | 1 | G 06 F 15/336 |
| A | COMPUTER DESIGN, Band 16, Nr. 2, Februar 1977, Seite 114, Concord, US; "Multichannel high speed correlator" * Insgesamt * --- | 1 | |
| A | EP-A-0 107 405 (HONEYWELL) * Figur 2; Seite 2, Zeilen 7-12; Seite 4, Zeile 21 - Seite 5, Zeile 10 * ----- | 2 | |

RECHERCHIERTE
SACHGEBIETE (Int. Cl.4)

G 06 F

Der vorliegende Recherchenbericht wurde für alle Patentansprüche erstellt

| Recherchenort | Abschlußdatum der Recherche | Prüfer |
|---|---|---|
| DEN HAAG | 01-08-1989 | COPPIETERS C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.......................................................................
& : Mitglied der gleichen Patentfamilie, übereinstimmendes Dokument